# EUROPEAN PATENT APPLICATION

(11) **EP 1 722 565 A1**
(43) Date of publication of application: **15.11.2006**
(21) Application number: 06113644.6
(22) Date of filing: 08.05.2006
(51) Int. Cl.: H04N 7/167

(54) **Network interface unit**

(30) Priority: 11.05.2005 KR 2005039415
(71) Applicant: Samsung Electronics Co., Ltd., Suwon-si, Gyeonggi-Do (KR)
(72) Inventor: Lee, Ye-youl 1018-1503 Mokdong Apt., Seoul (KR); Kim, Chang-yong 802-505 Hyundai Sungwoo Apt., Gyeonggi-do (KR)
(74) Representative: Piotrowicz, Pawel Jan Andrzej

(57) **Abstract**

A network interface unit (NIU) based on an expandable home theatre (XHT) is provided with a tuner (110) which receives a broadcasting signal over an external network, a demodulator (120) which demodulates a baseband signal from the received broadcasting signal, and an NIU chipset (130) which creates a data signal based on an IEEE 1394 protocol from the baseband signal, and transmits the created signal to an A/V apparatus connected to an internal network. The NIU chipset comprises a POD interface controller (132) which outputs a scrambled transport stream included in the baseband signal, receives an encrypted signal, which is a response to the transmitted transport stream, and decodes the received encrypted signal to restore the transport stream, a de-multiplexer (133) which parses the restored transport stream and de-multiplexes the transport stream to extract a bit stream and a 1394 module (136) which converts the extracted bit stream into data signals according to the IEEE 1394 protocol.

## Description

The present invention relates to a network interface unit and a chipset for a network interface unit.

In recent years, with significant development in techniques for processing digitalized audio/video (hereinafter, referred to as "A/V") signals, numerous A/V apparatus or devices, such as a digital television, a set-top box, a DVD player and a digital amplifier, can be installed and used in a home or office. A remote control unit can be used to easily control these A/V devices. However, the larger the number of A/V devices provided in any given space, then the more complicated and difficult it becomes to control these devices.

Therefore, techniques for integrating A/V devices into a single system have been studied, so that a user can easily control the integrated system of devices. The main object of the study is to connect A/V devices to other A/Vdevices, via network interfaces, so as to provide a single A/V network system.

As a part of the study, there has been proposed and developed an expandable home theatre (XHT) technique, such as a middleware for A/V home networking. The XHT technique is a home network solution based on a digital television which has been developed by Samsung Electronics, Co., Ltd., and adopted as an industry standard by the Consumer Electronics Association (CEA).

According to the XHT technique, a plurality of digital televisions, as well as A/V apparatus connected to the digitaltelevisions, can be easily controlled using an IEEE 1394 cable (also called "FireWire") capable of stably transmitting various high-definition-level signals and Internet protocol (IP), which is a communication protocol mainly used for the Internet. The XHT technique makes it possible for the user to watch a digital television in the bedroom, using a digital broadcasting receiving function of a digital television in the living room.

A network interface unit (NIU) has been developed on the basis of the XHT technique, in the form of a memory card. Such a network interface unit can be easily changed according to the type of network over which the broadcasting signal is received, such as terrestrial, satellite or cable.

The network interface unit is a digital apparatus which can provide a high-quality video/audio service at low cost. The network interface unit includes part of the function of the conventional set-top box and provides a video/audio streaming service to the digital television based on XHT through an IEEE 1394 channel, cheaper than a conventional set-top box.

A conventional network interface unit is realized by, for example, an open cable, a satellite broadcasting receiving network interface module (NIM), a point of development (POD) interface, a 1394 interface and a central processing unit (CPU) at a board level. Therefore, scope for reducing the cost the network interface unit is limited.

The present invention seeks to provide an improved network interface unit and a chipset for a network interface unit.

According to the present invention there is provided a chipset for generating a data signal from a baseband signal in accordance with IEEE 1394 protocol, the chipset comprising an interface module configured to output a scrambled transport stream included in the baseband signal, to receive an encrypted signal and to decode the encrypted signal to provide a descrambled transport stream, a de-multiplexer module arranged to parse the descrambled transport stream and to de-multiplex the transport stream to extract a bit stream and an 1394 module arranged to convert the bit stream into a data signal in accordance with the IEEE 1394 protocol for transmission to audio/video apparatus via a network.

Thus, a main part of the network interface unit is formed in a single chipset and not at a board level. This can help to reduce the cost of a network interface unit module. Also, this can help to reduce the amount of data transmitted from each module and to simplify device drivers for the module.

The transport stream may be a moving picture expert group-2 (MPEG-2) transport stream and the bit stream is a video bit stream compressed in accordance with a MPEG-2 compression standard. The network may be an extendable home theatre (XHT) network. The audio/video apparatus may include a unit for decoding at least the bit stream.

The chipset may further comprise a network interface module (NIM) interface arranged to receive signals from a demodulator and to interface the signals such that the chipset is able to use the signals. The encrypted signal may be obtained by descrambling the transport stream and by encrypting the descrambled signal according to a predetermined encoding system.

The chipset may further comprise memory connected to the de-multiplexer and the 1394 module via a bus, the memory arranged to receive the bit stream, to temporarily store the bit stream and to supply the bit stream to the 1394 module. The 1394 module may comprise a transaction layer configured to perform reading, writing and locking of asynchronous data, a link layer having a first-in, first out (FIFO) buffer for temporarily storing the asynchronous data and isochronous data; and a physical layer configured to transmit the asynchronous data and the isochronous data temporarily stored in the FIFO buffer to the network, wherein the bit stream is transmitted as the isochronous data. The 1394 module may further comprise a data transmission content protection (DTCP) module for encrypting the bit stream by an encrypting system using a public key before the bit stream is transmitted to prevent the illegal duplication of the video bit stream while the video bit stream is being transmitted.

Device drivers for driving the interface module, the de-multiplexer and the 1394 module may be ported to the chipset.

The transport stream output by the de-multiplexer may be transmitted to the 1394 module through a hardwired connection. The signal may be input to or output from the interface controller by a personal computer memory card international association (PCMCIA) system. The interface module, the de-multiplexer module and the 1394 module may be software modules written to perform respective functions.

According to the present invention there is also provided a network interface unit comprising a tuner for receiving a broadcast signal, a demodulator for demodulating the broadcast signal to generate a baseband signal and a chipset for generating a data signal from the baseband signal in accordance with IEEE 1394.

Thus, the network interface unit need not be integrated into a set-top apparatus, but be connected by a network. This can help to simplify the set-top apparatus and, thus, reduce the cost of the set-top apparatus.

Embodiments of the present invention will now be described, by way of example, with reference to the accompanying drawings in which:
Figure 1 is a schematic diagram illustrating structure of an embodiment of a network interface unit according to the present invention;
Figure 2 is a schematic diagram illustrating a chipset provided in the network interface unit shown in Figure 1;
Figure 3 is a diagram illustrating an exemplary configuration of an MPEG-2 transport stream;
Figure 4 is a diagram illustrating an exemplary configuration of an MPEG-2 video bit stream;
Figure 5 is a diagram illustrating the detailed structure of an exemplary 1394 module included in the chipset shown in Figure 2; and
Figure 6 is a block diagram illustrating another embodiment of a chipset according to the present invention.

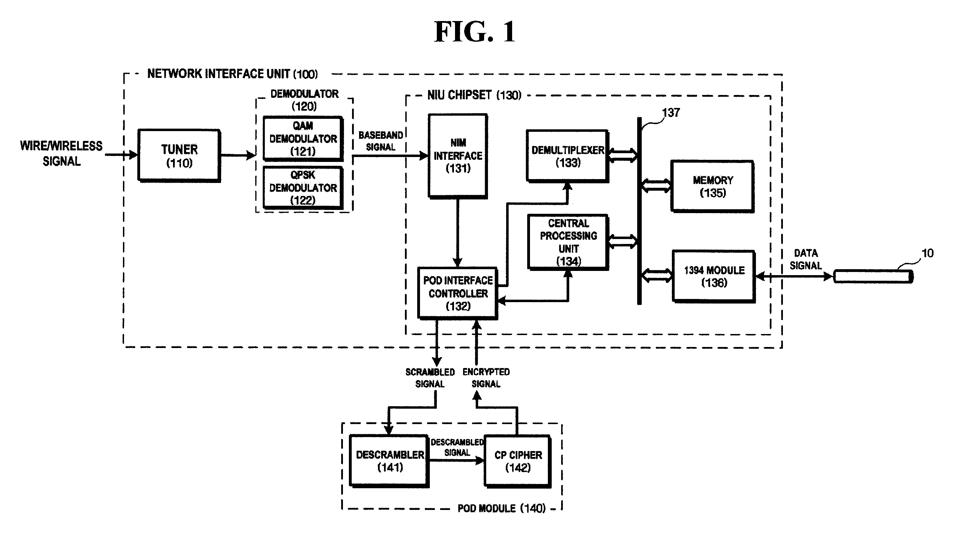

Figure 1 is a block diagram illustrating the structure of an embodiment of a network interface unit according to the invention. As shown in Figure 1, the network interface unit (NIU) 100 includes, for example, a tuner 110 for receiving RF (wire/wireless) signals transmitted from an external network such as a broadcasting network; a demodulator 120 having various modulating modes; and a NIU chipset 130. The tuner 110 receives signals selected by a user from wire/wireless signals transmitted from wire/wireless media. For example, the tuner 110 may include an RF antenna for receiving broadcasting signals transmitted through the air, and an intermediate frequency (IF) converting unit for selectively receiving signals in a desired channel among various broadcasting signals and for converting the selected signal into an intermediate frequency signal. In order to receive cable broadcasting signals, the network interface unit 100 may include a cable modem (not shown) and the RF antenna may be replaced with a signal input terminal to the cable modem.

The tuner 110 supplies the intermediate frequency signal to the demodulator 120 for demodulation. Then, the demodulator 120 removes a frequency offset, a phase jitter, and an interference between symbols due to a multi-path from the intermediate-frequency signal and restores a baseband signal by a predetermined demodulating method,for example, VSB-8, VSB-16, QAM64, QAM256, QAM1024, DPSK or QPSK. The restored baseband signal is then supplied to the NIU chipset 130. The baseband signal may be one of various types of data signals, such as a compressed video signal, a compressed audio signal, and a compressed graphic signal. However, for purposes of brevity and simplicity, the baseband signal will be herein referred to as an MPEG-2 transport stream.

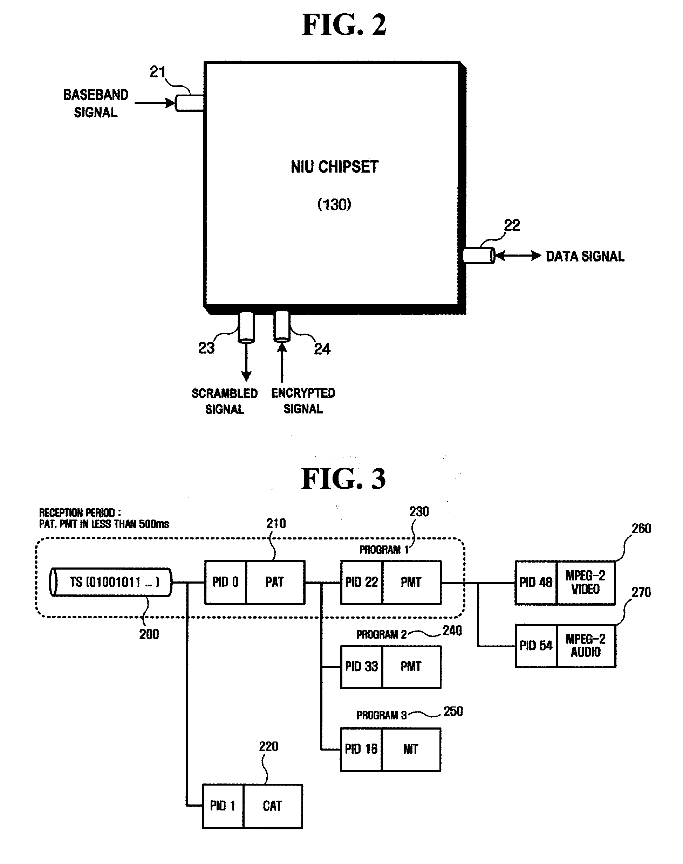

The NIU chipset 130 receives the baseband signal to create a data signal based on an IEEE 1394 standard protocol. Figure 2 is a diagram schematically illustrating an embodiment of an NIU chipset 130 according to the present invention. As shown in Figure 2, the NIU chipset 130 includes, for example, a terminal 21 for receiving the baseband signal from the demodulator 120, two terminals 23, 24 connected to a conditional access system (CAS), such as an external point of development (POD) system and a terminal 22 connected to an IEEE 1394 cable 10, as shown in Figure 1.

A scrambled MPEG-2 transport stream is then output to the external POD system through the terminal 23, and the signal scrambled and encrypted by the external POD system is input to the terminal 24. The terminals 23, 24 may be realized by, for example, a personal computer memory card international association (PCMCIA) system. The PCMCIA represents an association for standardizing the size of a memory card and an input/output device such that they can be used for a notebook computer or standards defined by the association.

Referring to Figure 1 again, the components of the NIU chipset 130 will be described in detail herein below. The baseband signal output from the demodulator 120, that is, the MPEG-2 transport stream is input to a network interface module interface 131. The NIM interface 131 receives various types of signals output from the demodulator 120 to interface the signals such that the NIU chipset 130 can use the signals.

The MPEG-2 transport stream input to the NIM interface 131 is transmitted to a POD interface controller 132. The POD interface controller 132 is a device for controlling interface with an external POD module 140. The POD interface controller 132 transmits the MPEG-2 transport stream to the POD module 140 through the output terminal 23 (Figure 2), and receives encrypted signals from the POD module 140 through the input terminal 24 (Figure 2). Since the MPEG-2 transport stream, which is the baseband signal, is scrambled in a broadcasting output state and is then output therefrom, the MPEG-2 transport stream is in a scrambled state. Therefore, to help demultiplex the MPEG-2 transport stream in this stage and the external POD module 140 performs a scramble process on the MPEG-2 transport stream.

The POD module 140 is connected to the NIU chipset 130 by the PCMCIA system. In general, in order to operate the POD module 140, the user should insert a smart card issued by a content provider. The POD module 140 includes a descrambler 141 and an integrated copy-protection (CP) cipher 142. The POD module 140 receives the scrambled signal from the NIU chipset 130 and descrambles the received signal using a descrambler 141. Then, the descrambled signal, that is, the original signal is encrypted by the copy-protection (CP) cipher 142. The encrypted signal is transmitted to the NIU chipset 130 again. The descrambled signal is encrypted again so as to prevent an authorized user from reading the content of the signal even when the authorized user intercepts the signal being transmitted from the POD module 140 to the NIU chipset 130.

The POD interface controller 132 receives the encrypted signal from the POD module 140 and decodes the received signal using an integrated copy-protection (CP) decipher (not shown) to restore the MPEG-2 transport stream which is not encrypted. Then, the POD interface controller 132 supplies the restored signal to a de-multiplexer 133 included in the NIU chipset 130.

The de-multiplexer 133 parses and de-multiplexes the supplied MPEG-2 transport stream under the control of a central processing unit (CPU) 134 to extract video and audio signals.

Turning now to Figure 3, an example MPEG-2 transport stream (TS) 200 is illustrated. As shown in Figure 3, an MPEG-2 transport stream 200 is composed of a plurality of transport packets each having a fixed length of 188 bites. Each of the transport packets is composed of a 4-bite packet header and a 184-bite data area. The packet header includes, for example, 8-bit synchronous information and a packet identifier (PID) having a binary value of 13 bits.

A video packet 260, an audio packet 270, and a program specific information (PSI) data packet are included in the transport packets. The PSI includes transport packets, such as a program association table (PAT) 210, program map tables (PMPs) 230, 240 corresponding to programs, for example, program #1, program #2, and a network information table (NIT) 250 corresponding to program #3. When a restricted reception of broadcasting, such as charged broadcasting, is needed, a transport packet, called a conditional access table (CAT) 220, may be used. A unique PID is allocated to each transport packet. The kind of data stored in the data area of the transport packet can be identified by the unique PID. However, in case of the PAT 210, the PID is fixed to zero (0).

Information on the corresponding programs is written in the PAT 210 and PMTs 230, 240, and different information is entered therein for every channel. However, the program numbers and the channel numbers of all the programs currently being serviced as well as the program broadcasted through the corresponding channel are written in the NIT 250.

However, when the corresponding channel does not receive the PAT 210 and the PMTs 230, 240, other transport packets do not work. Therefore, in general, the PAT 210 and the PMTs 230, 240 are received at predetermined time intervals.

Next, the de-multiplexing operation performed by the de-multiplexer 133 included in the NIU chipset 130 will be described below.

First, the de-multiplexer 133 searches the transport packet whose packet identifier (PID) is "0" among all transport packets in the MPEG-2 transport stream 200 and reads out the data area thereof, that is, the program association table (PAT). The PAT includes the program map tables (PMTs) for various programs and the packet identifiers (PIDs) thereof. In a case in which a program No. 1 is selected, when the reading of the PAT shows that the PID of the program No. 1 is "22", the de-multiplexer 133 searches a transport packet whose PID is "22" among the transport packets which are subsequently received and reads out the data area thereof, that is, the PMT thereof. The reading of the PMT makes it possible to know the PID of the transport packet including the video and audio data of the corresponding program. That is, it possible to know that the video data of the program No. 1 has a PID of "48" and the audio data thereof has a PID of "54" by the reading of the MPT. Therefore, among the transport packets subsequently received, transport packets having a PID of "48" constitute an MPEG-2 video bit stream, and transport packets having a PID of "54" constitute an MPEG-2 audio bit stream 200.

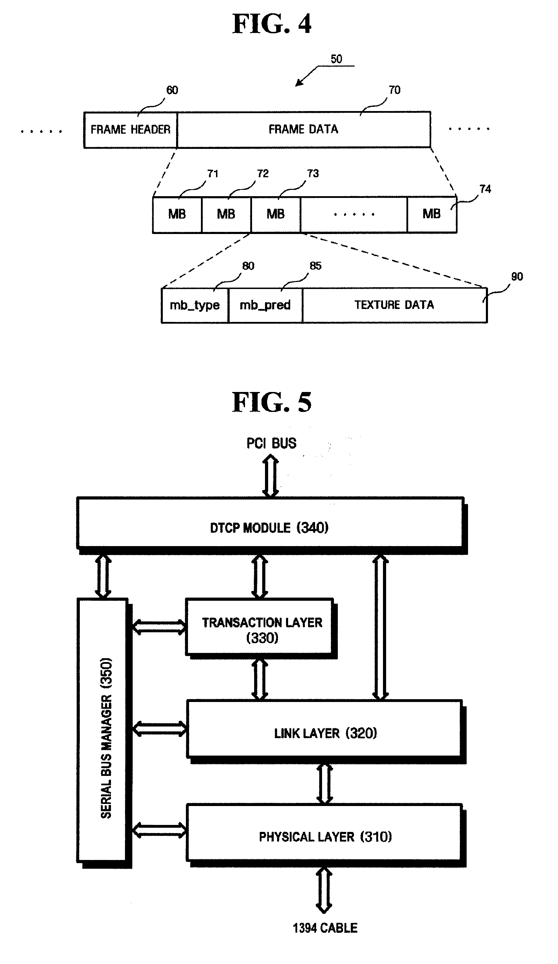

Figure 4 shows an example structure of the MPEG-2 video bit stream. In accordance with the MPEG-2 standard, video signals are encrypted in units of frames. Therefore, each bit stream 50 includes a frame header 60 and frame data 70. The frame data 70 comprises a plurality of macro-block data 71 to 74. In addition, the macro-block data 73 may be composed of an mb_type field 80, an mb_pred field 85, and a texture data field 90.

A value indicating the kind of macroblock is recorded in the mb_type field 80. That is, a value indicating whether the current macroblock is an intra macro-block or an inter macro-block is recorded in the mb_type field 80. A detailed predictive mode according to the kind of macro-block is recorded in the mb_pred field 85. If the current macro-block is the intra macro-block, the selected intra predictive mode is recorded. On the other hand, if the current macro-block is the inter macro-block, a macro-block partition separate reference frame number and a motion vector are recorded.

Further, encrypted texture data is recorded in the texture data field 90. Referring again to Figure 1, the video bit stream and the audio bit stream extracted by the de-multiplexer 133 can be temporarily stored in a memory 135, via a PCI bus 137. The stored bit streams are supplied to a 1394 module 136, via the PCI bus 137. Then, the 1394 module 136 converts the bit streams into data signals according to the IEEE 1394 protocol and supplies the converted signals to another A/V apparatus within the XHT network.

An Enhanced Integrated Drive Electronics (EIDE), which is an interface of an auxiliary storage unit currently being used, is operated at low speed and is restricted in expansion. The SCSI system has a high degree of expansion, but is expensive. In addition, since the standard of the SCSI system is minimally defined, the protocols and drivers provided by manufacturers are slightly different from each other. In the SCSI system, expansion can be easily made from the theoretical point of view, but there is a difficulty in use due to the difference between characteristics of peripheral apparatuses in practice. Therefore, the IEEE 1394 standard has been developed to overcome the above-mentioned problems and to connect the peripheral apparatuses (particularly, high-speed peripheral apparatuses) with one cable. The IEEE 1394 standard is a series system, but is a digital interface. Therefore, in the IEEE 1394 standard, it is possible to transmit or receive digital data without conversion, and thus to reduce the loss of data.

Turning now to Figure 5, a detailed structure of an example 1394 module 136 is shown. The 1394 module 136 includes a physical layer 310, a link layer 320, a transaction layer 330, and a serial bus manager 350. The serial bus manager 350 is connected to three layers, that is, the physical layer 310, the link layer 320, and the transaction layer 330. The physical layer 310 is connected to an IEEE 1394 cable 10, as shown in Figure 1, and the other layers are connected to applications.

The serial bus manager 350 performs the adjustment of timing, the supply of power to all devices, and the management of all serial buses, and assigns functions, such as cycle masters, isochronous identifiers (IDs), and error recognition, to the layers. The serial bus manager 350 may be formed of a register structure according to the IEEE 1212 standard.

The transaction layer 330 functions to read, write, and lock an asynchronous protocol. In the writing of the asynchronous protocol, data is transmitted from a transmitter side to a receiver side. In the reading of the asynchronous protocol, data is transmitted from the receiver side to the transmitter side. As a combination of the writing and the reading, the locking function means retransmitting data after the transmission of data to another transmitter side, when the receiver side and the transmitter side communicate with each other.

The link layer 320 includes two FIFOs (first-in first-out) for transmitting/receiving synchronous and isochronous transport packets and one receiving FIFO. Each of the FIFOs has a length of 32 bits and the user can determine software on the basis of the size of the FIFO. The asynchronous FIFO for transmission and the isochronous FIFO is used for writing, and the FIFO for reception is used for reading. In the asynchronous transmission, data and layer information are transmitted to a specified address, and the asynchronous transmission is used to transmit information to an apparatus required to be operated in real time, such as a printer or a scanner. In the isochronous transmission, data including a channel number, not an address, is transmitted. That is, although errors occur, retransmission is not required in order for real-time transmission. The isochronous transmission makes it possible to transmit the video stream or the audio stream temporarily stored in the memory 135 to other A/V apparatuses, such as, for example, digital TVs and DV video cameras.

The physical layer 310 is electrically and physically connected between the IEEE 1394 device and the cable, and functions as a repeater for actually transmitting/receiving data, for allowing all devices to sequentially perform the bus, and for providing the same function to the ports.

When a new peripheral apparatus is added to the network or the existing apparatus is separated from the network while the components 310, 320, 330, 350 of the 1394 module are being operated, the configuration of the network is readjusted. At that time, the information transmitted over the network is initialized, and the entire network is dynamically reconfigured. The addressees are reallocated to the nodes. In this case, if necessary, the node which is most frequently used may be forcibly designated as a route. After the configuration of the route node is completed, each node notifies other nodes of existence thereof. After information on all of the nodes is collected in this way, the IEEE 1394 interface is ready to start a normal operation.

Further, the 1394 module 136 may further include a DTCP (data transmission content protection) module 340 satisfying the DTCP standard for preventing illegal duplication of entertainment contents during transmission and reproduction. The DTCP is referred to as a so-called "5C" which is a technique used to encrypted data and transmit the encrypted data, on the basis of an encoding algorithm, AKE (authentication and key exchange), and a public key encrypting technique.

The bit stream transmitted from the memory 136, via the PCI bus 137, is encrypted by the DTCP module 340 and is then supplied to the serial bus manager 350, the transaction layer 330, or the link layer 320. Similarly, data received from the above-mentioned layers is decoded by the DTCP module 340.

Referring again to Figure 1, the 1394 module 136 encrypts the bit stream stored in the memory 136 through the procedure described in Figure 5, and converts the same into data signals according to the IEEE 1394 protocol. Then, the 1394 module 136 transmits the data signals to other A/V apparatuses through the IEEE 1394 cable 10, as shown in Figure 1.

Meanwhile, the central processing unit (CPU) 134 controls all components of the NIU chipset 130 and may be formed of, for example, a micro-processor. The central processing unit 134 is connected to the PCI bus 137 to transmit signals for controlling the de-multiplexer 133, the memory 135, and the 1394 module 136, via the PCI bus 137, and to receive response signals from the components.

The operating system (OS) for operating the process of the central processing unit (CPU) 134 and device drivers for driving the other components of the NIU chipset 135 are ported to the NIU chipset 130.

The data signals are transmitted from the network interface unit 100 to an A/V apparatus connected to the XHT network, such as a digital TV, via the IEEE 1394 cable, and are then converted into the video data or the audio data by the A/V apparatus. The A/V apparatus is provided with, for example, an MPEG-2 decoder, to decode the audio stream or the video stream included in the data signals. The decoded signals are converted into signals having a format (for example, NTSC, SVideo, and DVI) suitable for a visual display, such as a digital TV, by a signal output unit.

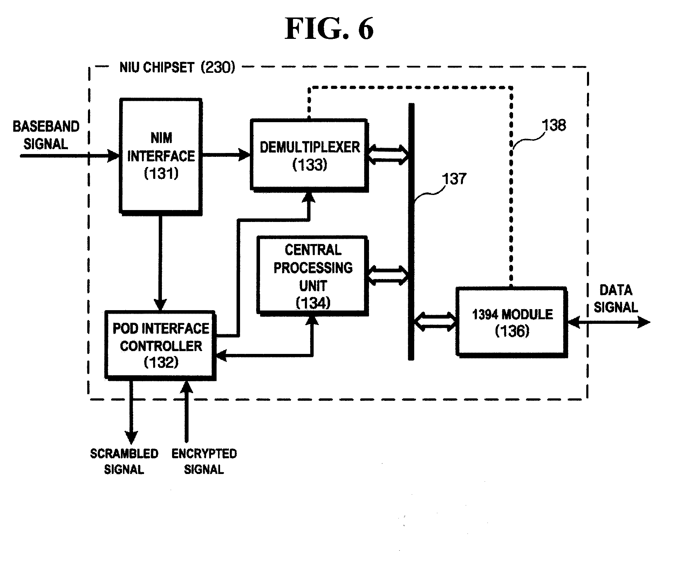

Figure 6 is a block diagram illustrating the configuration of another embodiment of an NIU chipset 230 according to the invention. In the embodiment described earlier with reference to Figure 1, the de-multiplexer 133 and the 1394 module 136 are connected to each other, via the PCI bus 137. The bit stream created by the de-multiplexer 133 is stored in the shared memory 135 and is then transmitted to the 1394 module 136, via the PCI bus 137.

Unlike the embodiment described earlier, the de-multiplexer 133 is directly connected to the 1394 module 136 by a synchronized hardwired connection 138, as shown in Figure 6, and the central processing unit 134 controls the transmission of data from the de-multiplexer 133 to the 1394 module 136, via the PCI bus 137. In the example configuration shown in Figure 6, the PCI bus 137 is used only for the central processing unit 134 to transmit signals for controlling the components and to receive the response signals therefrom, but does not function as a path for transmitting data.

The use of the hardwired system causes the signals output from the de-multiplexer 133 to be directly transmitted to the 1394 module 136 without passing through the memory 135, which makes it possible to simplify the structure of the system, to raise the transmission speed and to reduce the manufacturing costs of the NIU chipset 230. However, to help directly connect the de-multiplexer 133 to the 1394 module 136 by the hardwired connection 138, it is preferred that the de-multiplexer 133 and the 1394 module 136 be synchronised for data transmission. Therefore, it is preferred that the NIU chipset 230 be used in an environment in which data is transmitted from the 1394 module 136 to the XHT network at a predetermined transmission rate.

Previously, when a network interface unit is formed at the board level, a lot of time and money are required to develop port device drivers for modules included in the network interface unit and skilled technicians were needed to develop and port the device drivers. However, the network interface unit described earlier is formed of a single chipset, which makes it possible to reduce the manufacturing costs of the network interface and to shorten the time required to develop the network interface unit. This can help to provide an inexpensive network interface unit and chipset having software for performing the function of a network interface unit for a home or office network solution.

Various components of the network interface unit 100, such as the tuner 110, the demodulator 120 and the NIU chipset 130, as shown in Figure 1, Figure 2 and Figure 6, can be implemented in software or hardware, such as, for example, an application specific integrated circuit (ASIC). As such, it is intended that the processes described herein be broadly interpreted as being equivalently performed by software, hardware, or a combination thereof. Software modules can be written, via a variety of software languages, including C, C++, Java, Visual Basic, and many others. The various software modules may also be integrated in a single application executed on various types of wireless cards, such as PCMCIA cards, PCI cards, USB card. These software modules may include data and instructions which can also be stored on one or more machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). Instructions of the software routines or modules may also be loaded or transported into the wireless cards or any computing devices on the wireless network in one of many different ways. For example, code segments including instructions stored on floppy discs, CD or DVD media, a hard disk, or transported through a network interface card, modem, or other interface device may be loaded into the system and executed as corresponding software routines or modules. In the loading or transport process, data signals that are embodied as carrier waves (transmitted over telephone lines, network lines, wireless links, cables, and the like) may communicate the code segments, including instructions, to the network node or element. Such carrier waves may be in the form of electrical, optical, acoustical, electromagnetic, or other types of signals.

While there have been illustrated and described what are considered to be embodiments of the present invention, it will be understood by those skilled in the art and as technology develops that various changes and modifications may be made For example, the components of the network interface unit can be implemented in a single hardware or firmware installed at an existing card to perform the functions as described. In addition, alternative embodiments of the invention can be implemented as a computer program product for use with a computer system. Such a computer program product can be, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or nonvolatile, such as semiconductor, magnetic, optical or other memory device. Furthermore, both the software modules can also be machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). THe network interface unit (NIU) can also be implemented in a single ASIC chip installed at any A/V apparatus, such as a digital TV, PDP, LCD monitors and audio receiver.

## Claims

1. A chipset (130) for generating a data signal from a baseband signal in accordance with IEEE 1394 protocol, the chipset comprising:
an interface module (132) configured to output a scrambled transport stream included in the baseband signal, to receive an encrypted signal and to decode the encrypted signal to provide a descrambled transport stream;
a de-multiplexer module (133) arranged to parse the descrambled transport stream and to de-multiplex the transport stream to extract a bit stream; and
an 1394 module (136) arranged to convert the bit stream into a data signal in accordance with the IEEE 1394 protocol for transmission to audio/video apparatus via a network.

2. A chipset according to claim 1, wherein the transport stream is a moving picture expert group-2 (MPEG-2) transport stream and the bit stream is a video bit stream compressed in accordance with a MPEG-2 compression standard.

3. A chipset according to claim 1 or 2, wherein the network is an extendable home theatre (XHT) network.

4. A chipset according to claim 3, wherein the audio/video apparatus includes a unit for decoding at least the bit stream.

5. A chipset according to any preceding claim, further comprising:
a network interface module (NIM) interface (131) arranged to receive signals from a demodulator (120) and to interface the signals such that the chipset is able to use the signals.

6. A chipset according to any preceding claim, wherein the encrypted signal is obtained by descrambling the transport stream and by encrypting the descrambled signal according to a predetermined encoding system.

7. A chipset according to any preceding claim, further comprising:
memory (135) connected to the de-multiplexer (133) and the 1394 module (136) via a bus (137), the memory arranged to receive the bit stream, to temporarily store the bit stream and to supply the bit stream to the 1394 module.

8. A chipset according to claim 7, wherein the 1394 module (136) comprises:
a transaction layer (330) configured to perform reading, writing and locking of asynchronous data;
a link layer (320) having a first-in, first out (FIFO) buffer for temporarily storing the asynchronous data and isochronous data; and
a physical layer (310) configured to transmit the asynchronous data and the isochronous data temporarily stored in the FIFO buffer to the network,
wherein the bit stream is transmitted as the isochronous data.

9. A chipset according to claim 7 or 8, wherein the 1394 module (136) further comprises
a data transmission content protection (DTCP) module (340) for encrypting the bit stream by an encrypting system using a public key before the bit stream is transmitted to prevent the illegal duplication of the video bit stream while the video bit stream is being transmitted.

10. A chipset according to any preceding claim, wherein device drivers for driving the interface module (132), the de-multiplexer (133) and the 1394 module are ported to the chipset.

11. A chipset according to any preceding claim, wherein the transport stream output by the de-multiplexer (133) is transmitted to the 1394 module (136) through a hardwired connection.

12. A chipset according to any preceding claim, wherein the signal is input to or output from the interface module by a personal computer memory card international association (PCMCIA) system.

13. A chipset according to any preceding claim, wherein the interface module (132), the de-multiplexer module (133) and the 1394 module (136) are software modules written to perform respective functions.

14. A network interface unit (100) comprising:
a tuner (110) for receiving a broadcast signal;
a demodulator (120) for demodulating the broadcast signal to generate a baseband signal; and
a chipset (130) for generating a data signal from the baseband signal in accordance with IEEE 1394 protocol according to any preceding claim.
